# EUROPEAN PATENT SPECIFICATION

(11) **EP 3 447 281 B1**
(45) Date of publication and mention of the grant of the patent: **26.07.2023**
(21) Application number: 17785503.8
(22) Date of filing: 19.04.2017
(51) Int. Cl.: F03D 9/00, H02S 20/30, F03D 13/20, F03D 9/11, F03D 13/40

(54) **MOVABLE, AUTONOMOUS, SCALABLE, SELF-DEPLOYABLE, MONITORABLE, REMOTELY REPROGRAMMABLE SYSTEM FOR GENERATING ELECTRICAL ENERGY**
BEWEGLICHES, AUTONOMES, SKALIERBARES, SELBSTEINSETZBARES, ÜBERWACHBARES, FERNUMPROGRAMMIERBARE SYSTEM ZUR STROMERZEUGUNG
SYSTÈME DE GÉNÉRATION D'ÉNERGIE ÉLECTRIQUE MOBILE, AUTONOME, MODULABLE, AUTODÉPLIANT, POUVANT ÊTRE COMMANDÉ ET REPROGRAMMÉ À DISTANCE

(30) Priority: 20.04.2016 ES 201630500
(43) Date of publication of application: 27.02.2019
(73) Proprietor: Kemtecnia Tecnología Química Y Renovables, S.L., 21610 Huelva (ES)
(72) Inventor: RAMIREZ RODRIGUEZ, Antonio Angel, 28046 Madrid (ES); CURCHO ZARAGOZA, María del Mar, 21610 Huelva (ES); ANDÚJAR MÁRQUEZ, José Manuel, 21819 Palos de La Frontera (Huelva) (ES); SEGURA MANZANO, Francisca, 21819 Palos de la Frontera (Huelva) (ES); MARTÍNEZ BOHÓRQUEZ, Miguel Angel, 21819 Palos de la Frontera (Huelva) (ES); BOHÓRQUEZ RODRÍGUEZ, José Antonio, 21610 San Juan del Puerto (Huelva) (ES); CARVAJAL BRICIO, María Dolores, 28046 Madrid (ES); VIGRE MAZA, Jorge, 28046 Madrid (ES)
(74) Representative: Misselhorn, Hein-Martin
(86) International application number: PCT/ES2017/070241
(87) International publication number: WO 2017/182691

(56) References cited:
- WO-A1-2012/090191
- US-A1- 2006 137 348
- US-A1- 2008 196 758
- US-A1- 2010 207 452
- US-A1- 2011 146 751
- US-A1- 2011 176 256
- US-A1- 2014 125 134
- US-A1- 2015 300 321
- US-B1- 7 469 541

## Description

### FIELD OF THE INVENTION

The present invention relates to a moveable autonomous system for generating electrical energy that uses exclusively renewable energy sources.

### BACKGROUND OF THE INVENTION

Moveable systems for generating electrical energy using at least one source of renewable energy are known in the prior art.

Document ES 2 380 848 describes equipment for generating energy by photovoltaic solar capture, which is transportable and can be used for supplying power to communication systems in remote installations.

Document CA 2 610 506 describes moveable equipment for generating energy for use thereof in remote regions, which comprises a wind turbine, panels of photovoltaic solar cells, a diesel generator and a rechargeable battery.

Document EP 2 727 253 describes a system for generating solar and wind power that provides an environmentally friendly portable system for generating electricity. The system includes a portable housing that has a roof together with solar modules.

Document US 7 821 147 describes a towable floating portable platform for producing and storing electrical energy using wind, water and solar energy, or a combination of these methods. It also includes a stand-by diesel generator.

None of the aforementioned systems can fully replace the diesel generators that are usually employed for meeting demands for supply of electrical energy such as those that are installed in locations where conventional systems for supplying electrical energy using exclusively renewable energy sources have failed. Other prior art documents include, US2008/0196758, US2006/0137348 and US2012/0080072.

The present invention aims to solve this and other drawbacks.

### SUMMARY OF THE INVENTION

The invention provides a moveable autonomous system for generating electrical energy that comprises a subsystem for producing electrical energy of renewable origin, a subsystem for storing electrical energy, a subsystem for distributing electrical energy and a subsystem for instrumentation and control, the components of which can be stored in one or two containers that are transportable by conventional means of transport.

In its most complete embodiment, storable in two containers, the subsystem for producing energy is configured by combining a photovoltaic generator, a wind-powered generator and a fuel cell that is connected to a system for generating and storing hydrogen in situ, using electrical energy from the system, configured on the basis of an electrolyser and a tank for storing "solid" hydrogen, on the basis of metal hydrides.

In another embodiment, storable in one container, the subsystem for producing energy comprises a photovoltaic generator and a wind-powered generator.

The subsystem for storing electrical energy is formed by batteries that are rechargeable with the energy generated by the system to serve as electrical back-up at times of peak demand.

The three or four energy sources (wind, photovoltaic, batteries and fuel cell), which may or may not act simultaneously, endow the system with great capacity for manoeuvre, since they have different response times, specific energy density and specific power density, which means that their combination and suitable control generates the necessary synergy for meeting the requirements of the loads.

The great energy storage capacity provided by the hydrogen storage system and by the rechargeable batteries (the former being of greater capacity since its energy density per unit weight and volume is greater than in batteries) is able to compensate the intrinsically intermittent and variable nature of solar energy and wind energy.

For its part, the availability of three or four simultaneous power sources provides degrees of freedom in the flow of power that help to make the system more efficient, and therefore of smaller size.

It is a self-deployable, scalable, monitorable and remotely reprogrammable system.

The moveability and autonomy of the system are achieved by, on the one hand, a configuration of the modules of the photovoltaic generator that allows it to be stored in a conventional container and, on the other hand, by including between the components of the system a robotic arm and two end effectors that can be coupled thereto that allow it to act either as a crane that allows assembly of the entire system to be carried out automatically, quite especially the photovoltaic modules, on the ground in the location planned for it, or else as the tower of the wind-powered generator.

The system is scalable and can be integrated with others, which may or may not be of the same nature and architecture, for scaling to higher power and performance.

Other features and advantages of the present invention will become clear from the following detailed description of embodiments illustrating its subject matter together with the accompanying figures. The invention is defined by a moveable autonomous system for generating electrical energy according to claim 1.

### BRIEF DESCRIPTION OF THE FIGURES

Fig. 1 is a block diagram of the moveable autonomous system for generating electrical energy according to the invention.
Fig. 2 is a perspective view of an embodiment of the system with its components stored in two containers.
Fig. 3 is a perspective partial view of the system in the stage of assembly of the modules of the photovoltaic generator on the ground.
Fig. 4 is a perspective view of several modules of the photovoltaic generator mounted on the ground.
Figs. 5 and 6 are perspective views of the system after installation thereof in the location planned for it.
Fig. 7 is a perspective view of the system installed in a defined location including the shadows cast by the modules of the photovoltaic generator at the least favourable time of the year.

### DETAILED DESCRIPTION OF THE INVENTION

### The system for generating electrical energy

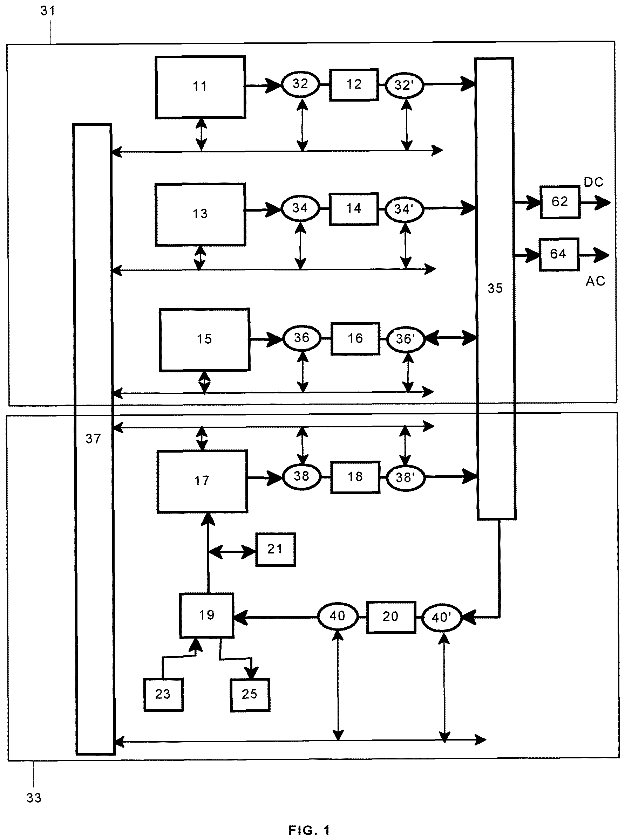

In the embodiment illustrated in Fig. 1, the moveable autonomous system for generating electrical energy of the invention comprises:
a) A subsystem for producing electrical energy formed by a photovoltaic generator 11, a wind-powered generator 13 and a fuel cell 17.

The fuel cell 17 is supplied with the hydrogen produced in an electrolyser 19 from mineralized water supplied from a mineralized water tank 23, or else from a metal hydrides tank 21 also connected to the electrolyser 19. The oxygen resulting from the electrolysis process is stored in the oxygen tank 25.
b) A subsystem for energy storage formed by a battery bank 15.
c) A subsystem for distributing electrical energy comprising a direct-current bus 35, which on the one hand receives the electrical energy produced by the photovoltaic generator 11, the wind-powered generator 13 and the fuel cell 17 and supplies or receives electrical energy to/from the battery bank 15 and, on the other hand, is configured for supplying energy as direct current or alternating current in the place where it is located (the flows of electric current are represented with thick lines in Fig. 1). The distribution subsystem comprises converters 12, 14, 16, 18, 20, 62, 64 suitable for making the necessary changes to the characteristics of the electric current in each component of the system.
d) A subsystem for instrumentation and control that comprises a controller 37, to which the photovoltaic generator 11, the wind-powered generator 13, the battery bank 15 and the fuel cell 17 and suitable sensors 32, 32', 34, 34', 36, 36', 38, 38', 40, 40' in the different branches of the system are connected, to provide the controller 37 with the information that it requires for performing its function (the flows of data and signals of the subsystem for instrumentation and control are represented with thin lines in Fig. 1). The system for instrumentation and control monitors all the variables of the system, ensuring recharging and the availability of power at any time, and may be configured to allow remote management of the system.

The four energy sources (photovoltaic, wind, fuel cell and battery bank) endow the system with great capacity for manoeuvre, since:
- They have different response times, specific energy density and power density, which means that their combination and suitable control produces the necessary synergy for meeting the requirements of the loads.
- The storage of hydrogen, metal hydrides tank 21, and the battery bank 15 allow energy storage (with greater capacity in the case of the metal hydrides tank 21, since the energy density per unit weight and volume is greater than in the battery bank 15), which can compensate the intrinsically intermittent and variable nature of solar energy and wind energy.
- The availability of four simultaneous power sources provides degrees of freedom in the flow of electric current that help to make the system more efficient and therefore of smaller size.

### Autonomy and moveability of the system

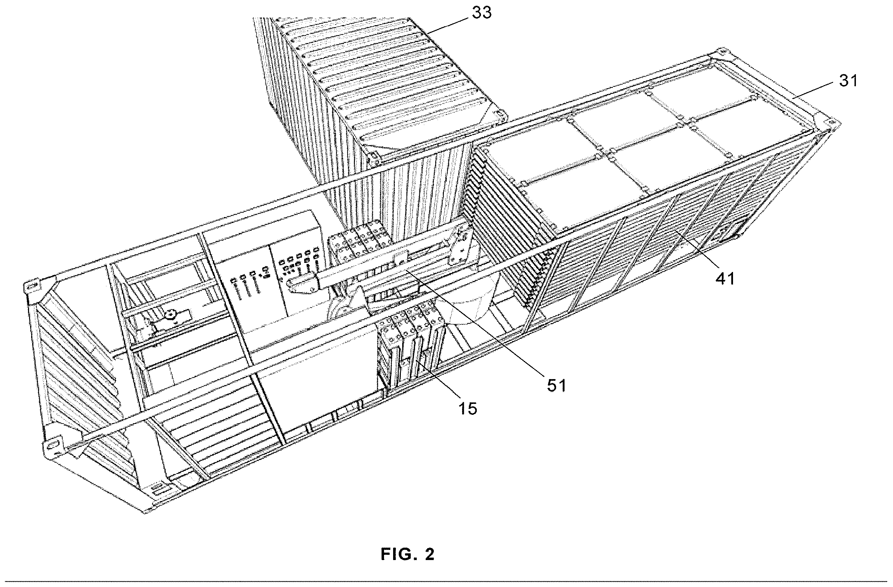

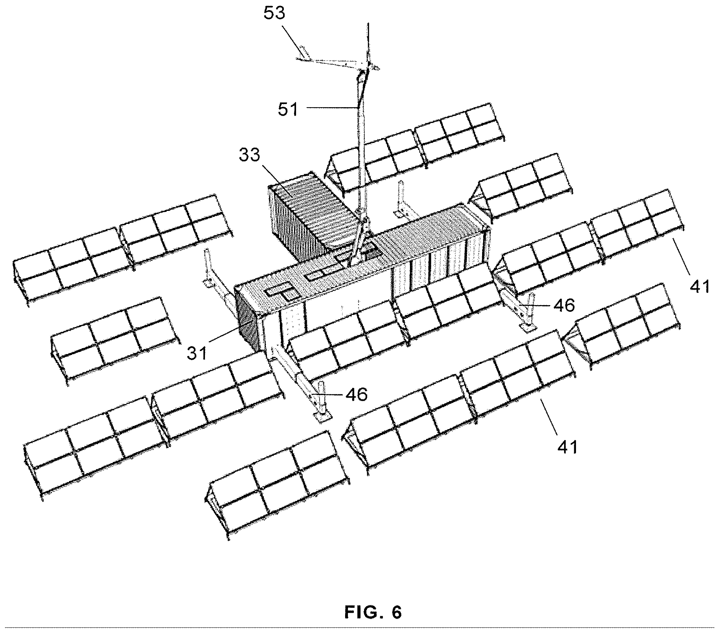

It can be seen from Figs. 2-7, which illustrate an embodiment of the system using all the energy sources mentioned, that the system is configured so that it can be stored in two standard 20' containers 31, 33 (approximate dimensions: 2.60 m x 2.40 m x 6.00 m) thus facilitating transport thereof by ship, aeroplane, railway or road.

All the components of the system will remain inside the containers 31, 33, facilitating safe transport without the possibility of its integrity being compromised.

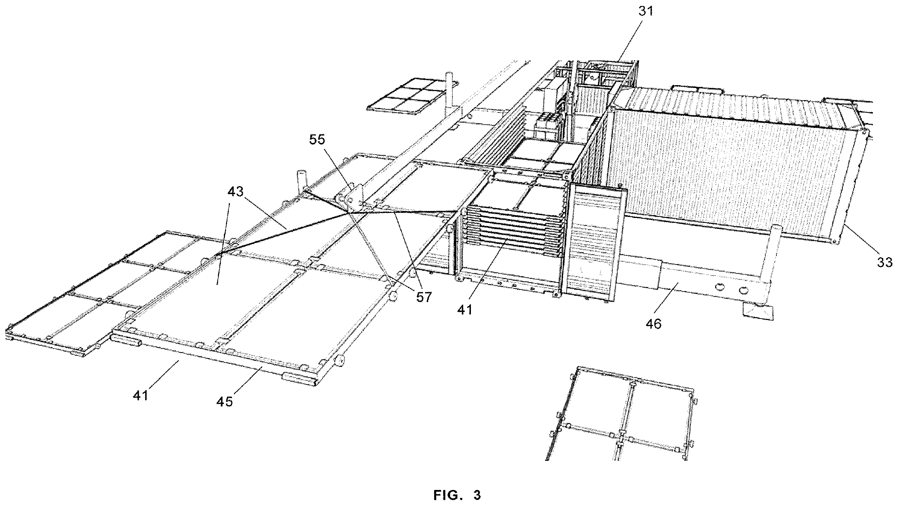

The basic components of the photovoltaic generator 11 are modules 41 with photovoltaic panels 43 pre-assembled in frames 45 structured so that the modules 41 may adopt either a folded configuration allowing storage thereof in the container 31 as shown in Fig. 2, or else a deployed configuration allowing installation thereof on the ground with a suitable angle of inclination of the photovoltaic panels 43 as shown in Fig. 3. For this purpose, the frames 45 are provided with moveable anchoring means that allow the photovoltaic panels 43 to be inclined at the appropriate angle as a function of the latitude of the location of the system with the aim of optimising the generation of photovoltaic energy.

For their part, the containers 31, 33 also include deployable anchoring feet 46 to improve their stability.

Preferably, the photovoltaic panels 43 are CTI panels (Transparent and Insulating Cover) that function as hybrid photovoltaic and thermal solar collectors, improving the efficiency of the photovoltaic collector by lowering its temperature, by extracting the heat required for heating water to 45-55°C, which allows it to be used for supplying hot water for sanitation, increasing its efficiency.

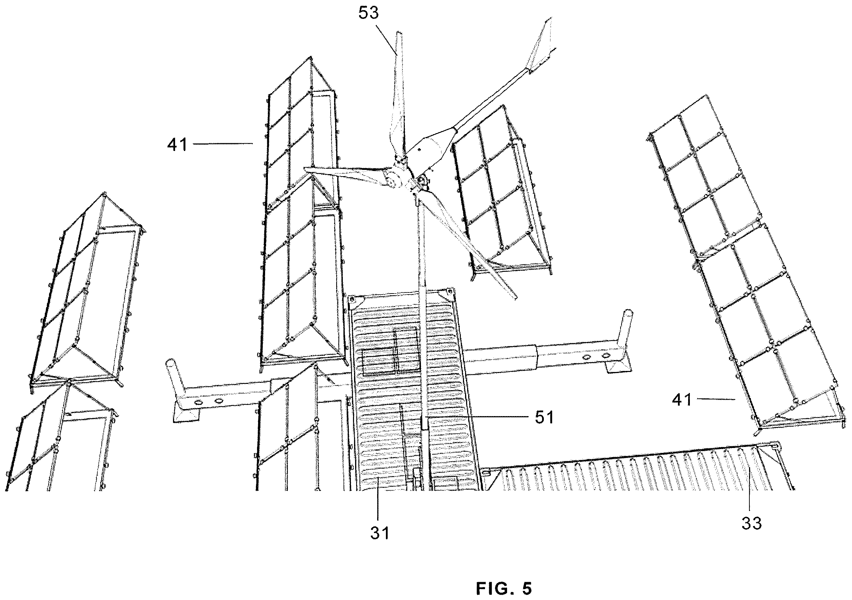

In addition, the system includes a robotic arm 51 formed by a set of articulated links and a first and a second end effector that can be coupled thereto, to act either as a crane or as the tower of the wind-powered generator 13. The articulated structure of the robotic arm 51 allows it to be folded for storage in the container 31 as shown in Fig. 2, and to be deployed to act as a crane (see Fig. 3) together with the first end effector or as the tower of the wind-powered generator 13, together with the second end effector supporting the wind turbine 53 (see Fig. 5).

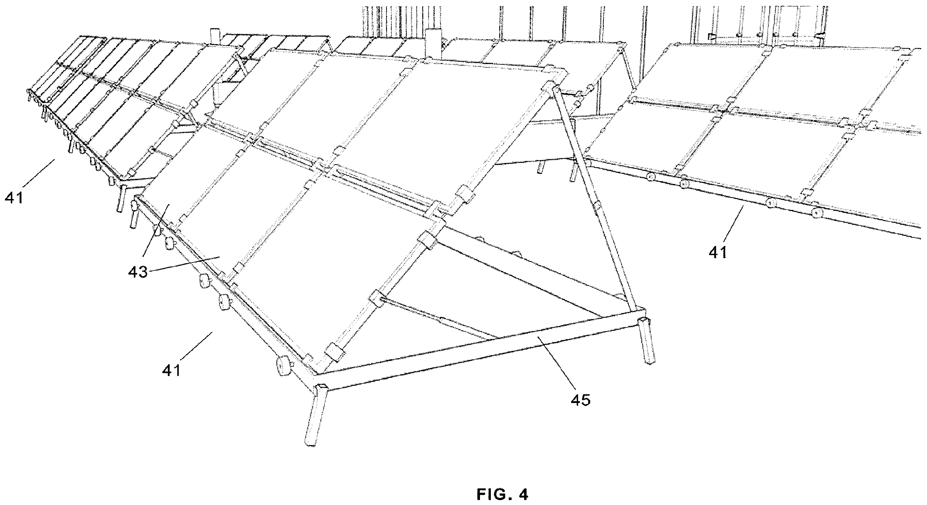

The first end effector comprises a hook 55 with slings 57 for holding and positioning automatically the modules 41 of the photovoltaic generator 11, joining the free ends of the slings 57 to their frames 45 to carry them from the container 31 to the place planned for their location, and depositing them on the ground (see Fig. 3) for their subsequent installation by unfolding the frames 45 (see Fig. 4).

Once the modules 41 of the photovoltaic generator 11 are installed on the ground, the first end effector is withdrawn from the robotic arm 51, the second end effector is coupled to it and the wind turbine 53 of the wind-powered generator 13 is mounted thereon.

The system may also comprise an antenna (not shown in the figures) that can be installed on the robotic arm 51, to act as the tower of the wind-powered generator 13, connected to the subsystem for instrumentation and control for the monitoring and remote reprogramming of the system.

In one embodiment, the robotic arm 51 is controlled, when it acts as a crane, by a computer system that allows automatic placement of the modules 41 in a predetermined position for them around the container 31 as a function of the latitude and longitude of the place of location of the system. Accordingly, a worker would only be occupied with the hooking and unhooking of the slings 57 of the hook 55 of the robotic arm 51 (acting as a crane) to the modules 41 and the unfolding of their frames 45.

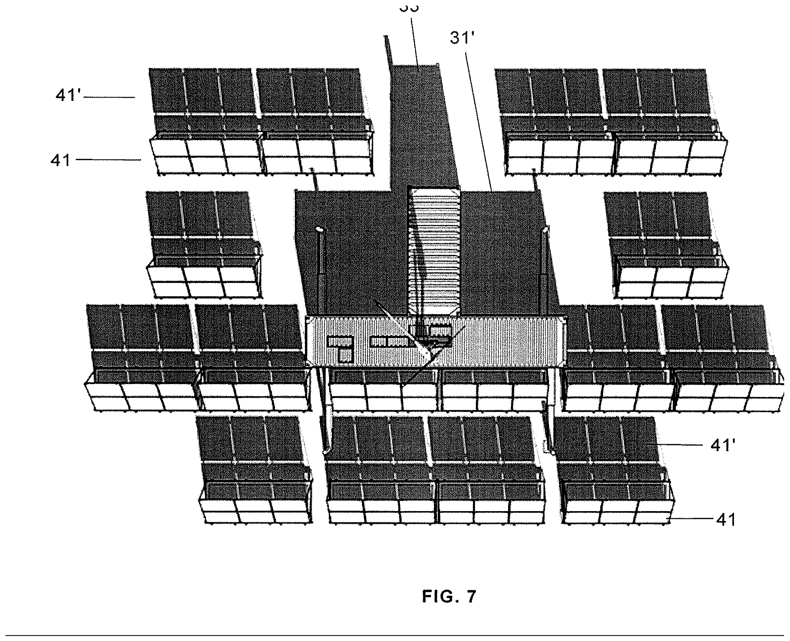

As illustrated quite particularly in Fig. 7, the modules 41 must be placed in very precise positions to avoid their being affected by shadows 41' produced by other modules 41, as well as by the shadows 31', 33' produced by the containers 31 and 33 on any day of the year and this is made easier with automation of its positioning.

In the embodiment illustrated in Figs. 2-7, container 33 accommodates all the components of the fuel cell 17 and its hydrogen supply system, and container 31 accommodates the remaining components of the system.

### Embodiment example

The following table shows, for comparison, various parameters of an example of the system of the invention and a 20kW generating set.

| PARAMETERS | SYSTEM | GENERATING SET 20kW |
|---|---|---|
| Annual output | 94 750 kWh* | 175 200 kWh |
| Cost (C/kWh) | 0.167 | 0.408 |
| Emissions | Zero emissions | 141.56 tonnes per year** |
| Useful life | 25 years | 5 years |
| Consumption of fossil fuels | 0 | 251.6 g/kWh |

| | | |
|---|---|---|
| * 31 930 wind, 30 820 photovoltaic, 27 000 batteries, 5000 hydrogen. **0.808 kg CO₂ eq. each kWh. | | |

Relevant data of the various components of the system are given below.

For a standard 20' container (approximate dimensions: 2.60 m x 2.40 m x 6.0 m) and assuming panels of 275 Wp, a total installed photovoltaic power of 22.25 kWp is estimated.

The battery bank 15 is dimensioned so that during the full day it can compensate, for maximum load demand, the periods with little generation of energy, and store the surplus energy during the peak periods of the photovoltaic and wind systems. It is estimated that 18 batteries of 4.75 kWh - 24V/180Ah each, are sufficient for always maintaining a minimum threshold safety load of 30%, with the aim of always having a positive energy balance.

The electrolyser 19 will generate 1000 N!/h of hydrogen and 500 NI/h of oxygen (consumption approx. 5 kW), from the demineralized water tank 23, which will remain fully integrated in the system, ensuring supply to the electrolyser 19. If it is considered that demineralized water might not be available in the place where the system is located, the system will additionally include a water demineralizer for supplying the electrolyser 19. To facilitate the immediate availability of hydrogen it is considered that the containers 31, 33 will be equipped with respective tanks of potable water (200 litres) and of demineralized water (200 litres). This will give an initial supply of at least 10 days without the need for external supply of water. It is considered that this time is more than sufficient for eventually solving the availability of water for the demineralizing plant.

The hydrogen produced will be stored in five metal hydride cylinders of 5000 Nl each, with a filling pressure of 15 bar, the same as is generated by the electrolyser 19. The cylinders will normally be transported discharged, so that the national and international standards and requirements for the transport of fuels and/or gases under pressure will not be applicable to them, and the movement and deployment of the equipment where it is required at this moment would be facilitated. The hydrogen charging/discharging subsystem will be controlled by the system for instrumentation and control of the unit with the appropriate valves and sensors.

The fuel cell 17 has 1500 W of power and will only come into operation when, faced with a drastic situation of unavailability of sun and wind, and batteries at the minimum, it is necessary to maintain critical loads. That is, it is a back-up or stand-by element.

### Advantages of the system

- It can work with four simultaneous energy sources.
- It produces water as the only "waste product", which may be recycled and used, and oxygen as a "by-product", which can be used in field hospitals, for example.
- It is capable of providing uninterrupted supply to the loads planned for its power automatically, self-generating the necessary energy from the environment.
- Owing to the process of folding for transport and deployment in the field, of the components of the photovoltaic and wind generators 11, 13, it is easier for generators of this type to act as energy sources alongside a fuel cell 17 and a battery bank 15, allowing electricity to be generated in situ for consumption and/or storage.
- The tank 21 for storing hydrogen by means of metal hydrides allows storage of the hydrogen produced in situ for consumption when required. They have the advantage of not requiring a step of compression or of decompression, which saves equipment and energy consumption. The autonomy of this tank must be as is necessary for guaranteeing operation of the fuel cell 17 throughout its operating time.
- It allows monitoring and remote reprogramming from any part of the world by restricted access to a communications network.
- It operates with minimum noise and low temperature (very low acoustic and infrared signature).
- It is scalable (for providing greater power and performance) with units that may or may not be similar to it, for example generating sets.
- It is self-deployable automatically owing to its programmed robotic arm, which can also act as a tower for housing the wind-powered generator and raising it to the appropriate height.

Although the present invention has been described in connection with several embodiments, it may be appreciated from the description that it is possible to make various combinations of elements, variations or improvements of them that are within the scope of the invention defined in the appended claims.

## Claims

1. Moveable autonomous system for generating electrical energy, which comprises a subsystem for producing electrical energy of renewable origin, a subsystem for storing electrical energy formed by a battery bank (15), a subsystem for distributing electrical energy, and a subsystem for instrumentation and control as well as means for storage of the components of said subsystems to facilitate movement of them to the intended location of the system where assembly thereof is undertaken, wherein:
- said storage means are one or two containers that are transportable by conventional means of transport;
- the subsystem for producing electrical energy of renewable origin comprises a photovoltaic generator (11) with a plurality of modules (41), in which the photovoltaic panels (43) are pre-assembled in frames (45) structured so that the modules (41) can adopt a folded configuration, allowing storage thereof in one of said containers, and a deployed configuration that allows installation thereof at the intended location of the system;
- the subsystem for producing electrical energy of renewable origin also comprises a wind-powered generator (13) with a wind turbine (53);
**characterized in that** the system further comprises a robotic arm (51) formed by a set of articulated links for adopting a folded disposition, allowing storage thereof in one of said containers, and a deployed disposition; as well as a first and a second end effector that can be coupled to the robotic arm (51) and are configured so that the robotic arm (51) acts as a crane together with the first end effector for in-situ assembly of the modules (41) of the photovoltaic generator (11) or as the tower supporting the wind turbine (53) together with the second end effector.

2. System according to claim 1, wherein:
- the distribution subsystem is a direct-current bus (35) connected on the one hand to the photovoltaic generator (11) and to the wind-powered generator (13) for receiving energy, and to the battery bank (15) for receiving/delivering electrical energy through suitable converters (12, 14, 16) and arranged for being connected, on the other hand, to external loads via suitable converters (62, 64) for direct current and alternating current respectively with predetermined characteristics;
- a first container (31) is used as a means for storage of the system.

3. System according to claim 2, which also comprises a fuel cell (17) connected to the direct-current bus (35) via a suitable converter, which is fed with hydrogen supplied directly by an electrolyser (19) or by a metal hydrides tank (21) connected thereto, all these components being stored in a second container (33).

4. System according to claim 3, wherein said first and second container (31, 33) are 20' containers.

5. System according to any one of claims 1-4, wherein the subsystem for instrumentation and control comprises means for remote monitoring and reprogramming, including an antenna that can be installed on the tower supporting the wind-powered generator (13).

6. System according to any one of claims 1-5, wherein the first effector of the robotic arm (51) comprises a hook (55) with slings (57) for holding the modules (41) of the photovoltaic generator (11) by joining the ends of the slings (57) to their frames (45).

7. System according to any one of claims 1-6, which also comprises a computer system for guiding the robotic arm (51) automatically, with the first effector coupled thereto during assembly of the modules (41) of the photovoltaic generator (11) in predetermined positions taking into account the latitude and longitude of the place where it is located.

8. System according to claim 7, wherein said computer system can be reprogrammed remotely.

## Patentansprüche

1. Bewegliches autonomes System zur Erzeugung von elektrischer Energie, das ein Teilsystem zur Erzeugung von elektrischer Energie erneuerbaren Ursprungs, ein Teilsystem zum Lagern von elektrischer Energie durch eine Batteriebank (15), ein Teilsystem zur Verteilung von elektrischer Energie und ein Teilsystem zur Instrumentierung und Steuerung sowie Mittel zur Lagerung der Komponenten der Teilsysteme umfasst, um deren Bewegung zu dem beabsichtigten Ort des Systems zu erleichtern, an dem dessen Zusammenbau vorgenommen wird, wobei:
- die Lagermittel ein oder zwei Container sind, die mit herkömmlichen Transportmitteln transportiert werden können;
- das Teilsystem zur Erzeugung von elektrischer Energie erneuerbaren Ursprungs einen photovoltaischen Generator (11) mit einer Vielzahl von Modulen (41) umfasst, bei dem die photovoltaischen Paneele (43) in Rahmen (45) vormontiert sind, die so strukturiert sind, dass die Module (41) eine eingefahrene Konfiguration annehmen können, die ihre Lagerung in einem der Container ermöglicht, und eine ausgefahrene Konfiguration, die ihre Installation an dem vorgesehenen Ort des Systems ermöglicht;
- das Teilsystem zur Erzeugung von elektrischer Energie erneuerbaren Ursprungs auch einen windgetriebenen Generator (13) mit einer Windturbine (53) umfasst;
**dadurch gekennzeichnet, dass** das System ferner einen Roboterarm (51) umfasst, der durch einen Satz von Gelenkgliedern gebildet ist, um eine eingefahrene Anordnung, die seine Lagerung in einem der Container ermöglicht, und eine ausgefahrene Anordnung einzunehmen; sowie einen ersten und einen zweiten Endeffektor, die mit dem Roboterarm (51) gekoppelt werden können und so konfiguriert sind, dass der Roboterarm (51) zusammen mit dem ersten Endeffektor für die Montage der Module (41) des photovoltaischen Generators (11) am Einsatzort wie ein Kran wirkt oder als der Turm, der die Windturbine (53) trägt, zusammen mit dem zweiten Endeffektor.

2. System nach Anspruch 1, wobei:
- das Verteilersubsystem ein Gleichstrombus (35) ist, der zum einen mit dem photovoltaischen Generator (11) und dem windgetriebenen Generator (13) zur Aufnahme von Energie und mit der Batteriebank (15) zur Aufnahme/Lieferung von elektrischer Energie über geeignete Umrichter (12, 14, 16) verbunden ist und zum anderen über geeignete Umrichter (62, 64) für Gleichstrom und Wechselstrom mit vorbestimmten Eigenschaften mit externen Lasten verbunden werden kann;
- ein erster Container (31) als Mittel zur Lagerung des Systems verwendet wird.

3. System nach Anspruch 2, das auch eine Brennstoffzelle (17) umfasst, die über einen geeigneten Umrichter an den Gleichstrombus (35) angeschlossen ist, der mit Wasserstoff gespeist wird, der direkt von einem Elektrolysator (19) oder von einem daran angeschlossenen Metallhydridspeicher (21) geliefert wird, wobei all diese Komponenten in einem zweiten Container (33) gespeichert sind.

4. System nach Anspruch 3, wobei der erste und zweite Container (31, 33) 20-Fuß-Container sind.

5. System nach einem der Ansprüche 1 - 4, wobei das Teilsystem für die Instrumentierung und Steuerung Mittel zur Fernüberwachung und -programmierung umfasst, einschließlich einer Antenne, die auf dem Turm, der den windgetriebenen Generator (13) trägt, installiert werden kann.

6. System nach einem der Ansprüche 1 - 5, wobei der erste Effektor des Roboterarms (51) einen Haken (55) mit Schlingen (57) zum Halten der Module (41) des photovoltaischen Generators (11) durch Verbinden der Enden der Schlingen (57) mit ihren Rahmen (45) umfasst.

7. System nach einem der Ansprüche 1 - 6, das auch ein Computersystem für die automatische Führung des Roboterarms (51) mit dem daran gekoppelten ersten Effektor während der Montage der Module (41) des photovoltaischen Generators (11) in vorgegebenen Positionen unter Berücksichtigung des Breiten- und Längengrades des Standortes umfasst.

8. System nach Anspruch 7, wobei das Computersystem aus der Ferne umprogrammiert werden kann.

## Revendications

1. Système autonome mobile de génération d'énergie électrique, qui comprend un sous-système de production d'énergie électrique d'origine renouvelable, un sous-système de stockage d'énergie électrique formé par un groupe de batteries (15), un sous-système de distribution d'énergie électrique, et un sous-système d'instrumentation et de contrôle ainsi que des moyens de stockage des composants desdits sous-systèmes pour faciliter leur déplacement jusqu'à l'emplacement souhaité du système où leur assemblage est effectué, dans lequel :
- lesdits moyens de stockage sont un ou deux conteneurs qui sont transportables par des moyens de transport classiques ;
- le sous-système de production d'énergie électrique d'origine renouvelable comprend un générateur photovoltaïque (11) ayant une pluralité de modules (41), dans lequel les panneaux photovoltaïques (43) sont pré-assemblés dans des châssis (45) structurés de sorte que les modules (41) puissent adopter une configuration pliée, permettant leur stockage dans l'un desdits conteneurs, et une configuration déployée permettant leur installation à l'emplacement souhaité du système ;
- le sous-système de production d'énergie électrique d'origine renouvelable comprend également une génératrice éolienne (13) avec une éolienne (53) ;
**caractérisé en ce que** le système comprend en outre un bras robotisé (51) formé par un ensemble de liaisons articulées pour adopter une disposition pliée, permettant leur stockage dans l'un desdits conteneurs, et une disposition déployée ; ainsi qu'un premier et un second organe terminal effecteur qui peuvent être couplés au bras robotisé (51) et sont configurés de sorte que le bras robotisé (51) agisse comme une grue conjointement avec le premier organe terminal effecteur pour un assemblage sur site des modules (41) du générateur photovoltaïque (11) ou comme la tour supportant l'éolienne (53) conjointement avec le second organe terminal effecteur.

2. Système selon la revendication 1, dans lequel :
- le sous-système de distribution est un bus à courant continu (35) connecté d'une part au générateur photovoltaïque (11) et à la génératrice éolienne (13) pour recevoir de l'énergie, et au groupe de batteries (15) pour recevoir/fournir de l'énergie électrique à travers des convertisseurs appropriés (12, 14, 16) et agencé pour être connecté, d'autre part, à des charges externes via des convertisseurs appropriés (62, 64) pour un courant continu et un courant alternatif respectivement avec des caractéristiques prédéterminées ;
- un premier conteneur (31) est utilisé en tant que moyen de stockage du système.

3. Système selon la revendication 2, qui comprend également une pile à combustible (17) connectée au bus à courant continu (35) via un convertisseur approprié, qui est alimentée en hydrogène fourni directement par un électrolyseur (19) ou par un réservoir d'hydrure métallique (21) qui lui est connecté, tous ces composants étant stockés dans un second conteneur (33).

4. Système selon la revendication 3, dans lequel lesdits premier et second conteneurs (31, 33) sont des conteneurs de 20 pouces.

5. Système selon l'une quelconque des revendications 1 à 4, dans lequel le sous-système d'instrumentation et de contrôle comprend des moyens de surveillance et de reprogrammation à distance, comportant une antenne qui peut être installée sur la tour supportant la génératrice éolienne (13).

6. Système selon l'une quelconque des revendications 1 à 5, dans lequel le premier organe terminal effecteur du bras robotisé (51) comprend un crochet (55) avec des élingues (57) pour maintenir les modules (41) du générateur photovoltaïque (11) en assemblant les extrémités des élingues (57) à leurs châssis (45).

7. Système selon l'une quelconque des revendications 1 à 6, qui comprend également un système informatique pour guider le bras robotisé (51) automatiquement, avec le premier organe terminal effecteur couplé à celui-ci lors de l'assemblage des modules (41) du générateur photovoltaïque (11) dans des positions prédéterminées en tenant compte de la latitude et de la longitude du lieu où il se trouve.

8. Système selon la revendication 7, dans lequel ledit système informatique est reprogrammable à distance.
